# EUROPEAN PATENT SPECIFICATION

(11) **EP 1 993 240 B1**
(45) Date of publication and mention of the grant of the patent: **19.04.2017**
(21) Application number: 07290649.8
(22) Date of filing: 18.05.2007
(51) Int. Cl.: H04W 12/08, H04L 29/06

(54) **Determination of a security assurance level of a mobile communication involving the network operator**
Bestimmung der Versicherungsstufe für ein mobiles Kommunikationsgerät einschließlich des Netzwerkbetreibers
Détermination d'un niveau d'assurance de sécurité d'une communication mobile impliquant l'opérateur de réseau

(43) Date of publication of application: 19.11.2008
(73) Proprietor: ALCATEL LUCENT, 92100 Boulogne-Billancourt (FR)
(72) Inventor: Marquet, Bertrand, 92350 Le Plessis Robinson (FR); Ansiaux, Arnaud, 91620 Nozay (FR)
(74) Representative: Wetzel, Emmanuelle

(56) References cited:
- JP-A- 2006 203 723
- US-A- 5 602 916

## Description

### Background of the invention

The invention relates to a method for determining a security assurance level of a mobile communication.

A method for determining and displaying the security level of a mobile communication is known from JP 2006-157470 A.

Numerous services are provided via the internet. While some of these services are for entertainment only, a considerable part of these services involves business activities, such as financial transactions with online banking or e-commerce, or the exchange of confidential information, for example by email, voice over IP (internet protocol) or video on demand. However, criminal activity in the internet is increasing. Such criminal activity involves, in particular, unauthorised fraudulent use of services and unauthorized accessing confidential information (SmiShing, phishing, intrusion, etc.).

As a consequence, a lot of potential internet users are afraid of insufficient security, in particular when business activities are intended. Potential users even may refrain from using the internet at all when they lack confidence in the security of a desired service.

This is particularly true for mobile communications. An end user of a mobile communication terminal often cannot control how a service is established. Users with high mobility, i.e. often changing the geographical area where they operate a mobile communication terminal, will face drastically changing security levels, depending on the local network equipment involved in establishing the desired service. A type of connection may even change during use of a mobile communication terminal when the type of connection is chosen automatically, e.g. for better quality of service (QoS), better signal reception or better price. As a result, the end-user does not know whether he can trust in the security of the service.

US 2006/0030295 A discloses a mobile wireless communication device having the option to view security status messages.

WO 03/083626 A1 discloses a method and an apparatus for network security. A first computer receives a beacon signal form a second computer, identifying software which has been run on the second computer. If the first computer identifies non-trusted software, the alert level of the first computer is raised.

JP2006-157470 A discloses a portable terminal, wherein a security level of the portable terminal can be chosen by the user. The portable terminal determines whether a communication link satisfies a chosen security level. The security level of the communication link is displayed on the portable terminal.

In the latter state of the art, it is the portable terminal which determines the security level of a communication link. However, said portable terminal does not have access to a considerable part of relevant security information. Therefore, the security level determined by the portable terminal has only a limited reliability.

US 5,602,916 discloses a method for preventing unauthorized monitoring of wireless data transmissions. A wireless communication system, comprising a communication unit, is connected to a security gateway, which in turn is connected to a public data system comprising particular databases. When the communication unit desires to access a particular database, it sends a request via the wireless communication system to the security gateway. The security gateway then analyses the type of data requested, the identity of the requesting communication unit, and the identity of the target database, in order to determine a scheduled security level, namely a particular encryption format, for the data transmission. The scheduled security level is messaged by the security gateway to the communication unit. If the security gateway receives an acknowledgement in due time, the security gateway then sends the requested data to the communication unit, using a data encryption according to the scheduled security level. If the security gateway does not receive the acknowledgement in due time, a fault message is sent, and the requested data is not sent.

### Object of the invention

It is the object of the invention to provide a more meaningful information about the security of a mobile communication required for a desired service.

### Short description of the invention

This object is achieved, in accordance with the invention, by a method for determining a security assurance level of a mobile communication, with the following steps:
a) a mobile communication terminal sends a service request to an infrastructure device of a mobile communication network,
b) the infrastructure device determines a scheduled security standard for the requested service, wherein the security standard defines minimum security measures within the mobile communication network;
b') the infrastructure device verifies whether the minimum security measures are active within the mobile communication network or not, wherein the operator of the infrastructure device actively checks relevant security information including that the infrastructure device requests and receives assurance information about telecom infrastructure of the mobile communication network required for the requested service, and the infrastructure device determines a security assurance level that can be achieved for the mobile communication required for said service, wherein the security assurance level is a function of the ratio of the verified active security measures and the respective minimum security measures as defined by the security standard, and wherein said mobile communication involves the mobile communication terminal and said mobile communication network,
c) the infrastructure device sends information about the determined security assurance level to the mobile communication terminal, wherein the determined security assurance level is an indication for a user of the mobile terminal to decide whether to establish the requested service or not,
d) the mobile communication terminal indicates said security assurance level to a user, and
e) the user decides whether to establish the mobile communication required for the service or not.

As the basic idea of the invention, the core network (i.e. the infrastructure level) assures (i.e. decides on and checks) the security level and informs the mobile communication terminal about it. Thus, the determination of the security assurance level is made more reliable by using information managed by the network operator of the infrastructure device inside its communication network and its SLA (service level agreements). If other network operators or service providers are involved in the required network communication, information managed by them is also included. The determination of the security of a mobile communication depends on different key factors. These key factors are mainly managed by the telecom operators, since these factors are distributed inside their network equipments and platform services. Some of the key factors are also directly in connection with the mobile communication terminal of the end user and private data which could be embedded (e.g. within a SIM card in the GSM case). Therefore, only the telecom operators can gather the information necessary to ensure a secure end-to-end communication or service, respectively.

Upon a service request, the operator of the infrastructure device which is contacted by the mobile communication terminal actively checks the relevant security information necessary to judge the security of the mobile communication required for the requested service. In other words, the operator gathers relevant information from the communication network in real time. Note that the operator activity is usually performed automatically by a dedicated software module.

After having received the relevant information, a security assurance level is determined by the infrastructure device. For this purpose, the infrastructure device analyses the received information and, in general, summarizes it. For this purpose again, typically a dedicated software module of the infrastructure device is used. The resulting information about the security assurance level is transferred to the mobile communication terminal, where it can be used for deciding about establishing the requested service (when the security assurance level is considered satisfactory) or not (if the security assurance level is considered insufficient).

The user of the mobile communication terminal may have high confidence in the determined security assurance level, since the telecom operators take part in its determination. Moreover, this security assurance level is provided to the mobile communication terminal of the end user, so the end user has all information to decide by himself to establish the requested service or not, including potential consequences.

During step b), the infrastructure device determines a scheduled security standard for the requested service, wherein the security standard defines minimum security measures within the mobile communication network, and the infrastructure device verifies whether the minimum security measures are active within the mobile communication network or not. The scheduled security standard depends on the type of service requested. Commercial applications, in particular e-banking, generally require a high security standard, whereas entertainment applications generally can do with a lower security standard. The minimum requirements (security measures) for different security standards may be stored in a data base the infrastructure device has access to. The infrastructure device then checks whether the minimum measures involved with the scheduled security standard can currently be guaranteed. For this purpose, the infrastructure device may request information from other network equipment or neighbouring networks or their operators, for example, or it may even send test signals to check whether particular security measures are active. After having gathered all obtainable information, the infrastructure device calculates the security assurance level, which is a function of (or an indicator for) the ratio of the verified active security measures and the respective minimum security measures as defined by the applicable security standard. In the most simple case, there are only two security assurance levels, one indicating that all security measures as defined in the security standard have been checked and found active, and another one indicating that not all security measures of the security standard can be guaranteed. Note that the security assurance level is different from the security level (=security standard). You can have a low security level (security standard), but a high security assurance level of this low security level, or you can have a high security level (security standard) with a low security assurance level for it. Further note that the security level (security standard) may sometimes be confidential for the network operator. However, it is preferred to inform the end-user about the security level (security standard), too, but this information is only depending on the requested service, and does not change over time. Therefore, the information about the security level (security standard) can be provided off-line, for example in a user manual, but also, if desired, online, in particular together with the security assurance level.

Further, the mobile communication terminal indicates said security assurance level to a user, in particular by displaying an icon, and
the user decides whether to establish the mobile communication required for the service or not. These additional steps increase the confidence of the user, and allow the user to control over the establishing of potentially dangerous services.

The infrastructure device requests and receives assurance information (β) about telecom infrastructure of the mobile communication network required for the requested service, in particular by means of a security assurance server of the mobile communications network. The obtained assurance information helps to make the determination of the security assurance level more reliable and/or more accurate. Said assurance information can include active firewalls of involved servers, encryption of data transfer between involved servers, types of software used, activation status of security software used, type of data transfer (radio, optical fiber, electric wire), and the like.

### Preferred variants of the invention

In a highly preferred variant of the inventive method, the security assurance level is one of a predetermined set of security assurance levels. The predetermined set of security assurance levels comprises preferably at least three security assurance levels. By means of the infrastructure device or its software module, respectively, all available assurance information is analysed, and one of several security assurance levels is assigned, thus summarizing and simplifying the assurance information. Different security assurance levels may be indicated on the terminal by different, easy to understand logos and/or colours, e.g. green for high assurance, yellow for medium assurance and red for low assurance. Note that for assigning different security assurance levels, the infrastructure device has access to evaluation rules for evaluating identified security hazards (with respect to the security standard), and assignment rules for assigning one of the predefined security assurance levels with respect to the evaluated security hazards. Evaluation rules and assignment rules can be summarized as decision rules; they are specific for a requested service or a correlated security standard, respectively. The decision rules can be stored in a database, in particular together with the definitions of the correlated security standard.

In an advantageous variant of the inventive method, during step b), the infrastructure device requests and receives technical configuration information (α) from the mobile communication terminal. The technical configuration information helps to make the security assurance level determination more reliable and/or more accurate. Note that in a further variant, the terminal may send its technical configuration information automatically along with its service request, making a formal request of the infrastructure device unnecessary.

In a variant, during step b), the infrastructure device requests and receives further assurance information (δ) from the mobile communication network about the mobile communication required for the requested service,
in particular wherein the further assurance information (δ) comprises private information on the user of the service. This further information may make the determination of the security assurance level even more reliable and/or more accurate.

Also within the scope of the invention is an infrastructure device for a mobile communication network,
wherein the infrastructure device comprises first means for
- receiving a service request from a mobile communication terminal,
- determining a scheduled security standard for the requested service, wherein the security standard defines minimum security measures within the mobile communication network,
- verifying whether the minimum security measures are active within the mobile communication network or not, wherein the infrastructure device comprises a software module for actively checking relevant security information including that the software module of the infrastructure device is programmed to request and receive assurance information about telecom infrastructure of the mobile communication network required for the requested service;
- determining a security assurance level of a mobile communication required for the service requested, wherein the security assurance level is a function of the ratio of the verified active security measures and the respective minimum security measures as defined by the security standard;
- sending information about the determined security assurance level to the mobile communication terminal, wherein the determined security assurance level is an indication for a user of the mobile communication terminal to decide whether to establish the requested service or not. This infrastructure device, installed in a communication network, can be used to perform the inventive method, as far a the side of the network provider is concerned.

In a preferred embodiment of said inventive infrastructure device, the infrastructure device is an application server or an IMS platform or a security server. This embodiment has been proven useful in practice.

Further within the scope of the invention is a communication system comprising an inventive infrastructure device and a mobile communication terminal,
wherein the mobile communication terminal comprises second means for
- sending a service request to the infrastructure device,
- receiving a security assurance level information from the infrastructure device,
- indicating said security assurance level to a user,
- and receiving a user decision whether to establish the mobile communication or not. The mobile communication terminal (such as a mobile phone, personal digital assistant, or laptop computer) can be used to perform the inventive method, as far as the side of the end user is concerned. With the inventive communication system, the complete inventive method can be performed.

In a preferred embodiment of the inventive communication system the first means comprises a first software module, and the second means comprises a second software module. In practice, the invention can be realized by two separate but complementary software modules. With their interfaces standardized, a mobile communication terminal with the first software module may access a communication network at any infrastructure device equipped with the second software module. The software modules organize and automate the communication between terminal and infrastructure device, and between infrastructure device and further communication network, as well as information analysis and security assurance level determination. Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.
- Fig. 1: shows schematically a communication system in embedded in an operator network according to the invention;
- Fig. 2: shows schematically the communication system of Fig. 1, along with data flow according to the inventive method;
- Fig. 3: shows a schematic flow diagram of the inventive method;
- Fig. 4: shows a setup of a physical connection to be analysed in the course of the inventive method.

The present invention addresses the problem of unreliable security information relating to services established by mobile communication terminals, such as mobile phones, PDAs, or laptop computers. The mobile communication terminals are generally not suitable for determining numerous key security factors for a mobile communication required for the service. Those factors are mainly managed by telecom operators because they are distributed inside their network equipments and platform services. As a consequence, the telecom operators are well suited for determining the relevant key security factors for a requested service, using a mobile communication involving the mobile communication terminal and network infrastructure.

The invention proposes to extend an infrastructure assurance concept up to the terminal (mobile device of the end-user). In particular, it is a telecom operator who determines the security for a requested (or already established and continuously surveyed) service. In other words, confidence and security assurance is assured by the operator for end-users by using information managed by the operator inside his network and his service level agreements with other telecom operators.

Moreover, the invention proposes to use an easy to understand indicator, represented by a simple icon on the end user devices (i.e. the MCT), which indicates the security assurance level of the intended (or current) connection, for a requested (or established and surveyed) service. This simple icon is preferably similar to an icon indicating a level of emission/reception.

The infrastructure device that the MCT contacts typically assigns a security assurance level taken from a predefined set of security assurance levels, e.g. comprising:
- green level (gr) indicating that the user can have full confidence (maximum assurance) in the service establishment, and communication will be totally secured and confidential;
- yellow level (ye) indicating that the security assurance is intermediate. For instance, the end user is in a safe communication zone and all counter measures are installed for the service requested, but the operator is making maintenance for a limited period of time. In this case, the user should try another solution or postpone his service request. If the user accepts to establish the service, it will be on his responsibility;
- red level (rd) indicating that there is no assurance that the service can be established securely. In this case the operator can unauthorized the service request regarding the user profile, for instance.

Note that relevant security information and security assurance level assignment may vary according to the type of service requested. The requested service is correlated with a scheduled security standard, which demands a set of security measures or requirements. For entertainment services, security may be focused on barring foreigners from accessing the user terminal, whereas tapping transmitted or received data may be irrelevant. For online banking, in contrast, tapping of transmitted or received data must be excluded reliably.

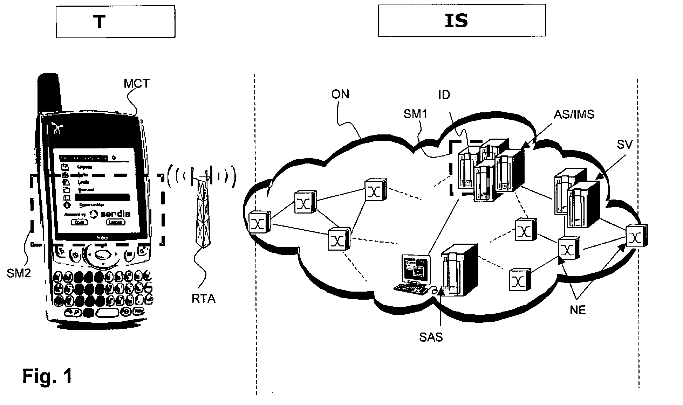

Fig. 1 illustrates a communication system in accordance with the invention, comprising a mobile communication terminal MCT (end-user device) and an infrastructure device ID (core network device). The infrastructure device ID is part of an operator network ON, marked with a cloud-like rim. The MTC can communicate with the infrastructure device ID by GMS (global system for mobile communications), as indicated with a radio transmission antenna RTA.

A typical infrastructure device ID may include an application server or an IMS platform (AS, IMS) or a plurality of those. The operator network ON further comprises various network equipment NE, servers SV, and a security assurance server SAS.

The infrastructure device ID has installed a first software module SM1, and the MTC has installed a second software module SM2. Both software modules SM1, SM2 together organize the inventive method for determining a security assurance level. Software module SM2 (or end-user security assurance level module) is designed for organizing all operations on the terminal side (left, marked T), and the software module SM1 (or infrastructure security assurance level module) is designed for organizing all operations on the infrastructure side (right, marked IS).

The main functionalities of the second software module SM2 on the MTC are:
- perform an internal configuration check of the end-user device: technical capabilities, embedded secure protocol, security countermeasures, anti-virus, etc;
- check if all these security processes are well configured and activated;
- receive the security assurance level information from the operator and displayed it with an icon on the device screen.

The main functionalities of the first software module SM1 on the infrastructure device ID are:
- receive "service_request" from end-user devices before starting services;
- request terminal configuration to integrate this data inside security metrics of an overall security assurance level;
- gather real-time information inside the operator network, especially from the "Security Assurance Server" SAS, but also from other servers SV, to build a dynamic security assurance indicator. This indicator could evolve during the time of the service establishment;
- determine a simplified assurance level indicator useful for the end-user;
- send the simplified assurance level indicator to end-user terminal;
- update the indicator, if security assurance level has changed, until the end of the service.

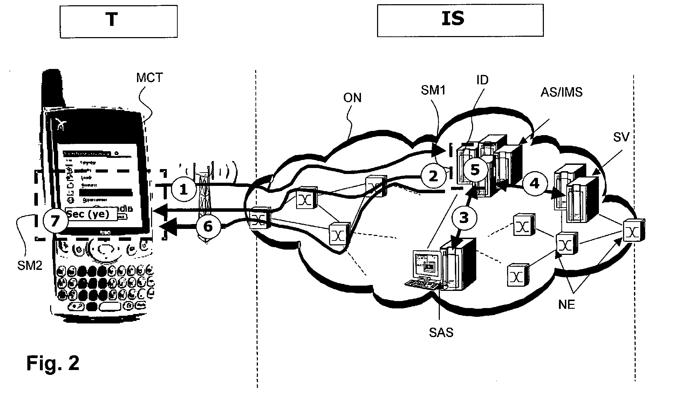

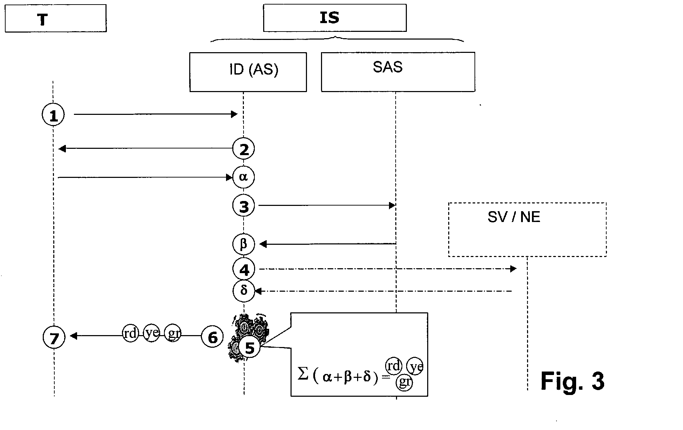

**Figure 2** **and** **Figure 3** illustrate the security assurance determination process for a demand of service by an end user, in accordance with the invention.
Step 1 (service request): An end-user wants to establish a connection to use a service. The new software module SM2 embedded on his terminal MCT sends a "service-request" to determine the level of security assurance for this service;
Step 2 (terminal configuration request): The new module SM1 implemented on the application server, or on the IMS platform for example, sends a configuration request to obtain technical information (α) about the end-user mobile device; the mobile device MCT resp. SM2 gives a configuration answer α to SM1;
Step 3 (service assurance level request): The module SM1 implemented on the application server AS or on the IMS platform sends a request to the security assurance server SAS to obtain an assurance level (β) delivered by the telecom infrastructure for the expected service; note that the SAS contacts servers, in particular of foreign telecom providers involved, as needed; the SAS gives a service assurance level answer β to SM1;
Step 4 (other useful information request): The module SM1 implemented on the application server AS or on the IMS platform could send requests to other servers SV or network equipment NE to obtain more precise or private information (δ) on the end-user regarding the level of security expected for the service; the other servers SV give said information δ; other information requests may include user profile, reachability, or information from authentification servers;
Step 5 (simplified assurance level determination): The module SM1 implemented on the application server AS or on the IMS platform analyzes all the gathered data (α, β, δ) and calculates a simplified value of security assurance (here red, yellow, or green, abbreviated rd, ye, gr);
Step 6 (sending of simplified assurance level information): The module SM1 implemented on the application server AS or on the IMS platform sends or updates the indicator of the service's security assurance to the end-user terminal MCT resp. SM2;
Step 7 (display icon): The module SM2 embedded on the end-user terminal MTC displays an icon which gives the security assurance level for the requested service (in Fig. 3, e.g. yellow).

As a result of the inventive method, telecom operators become a "third party" (or participant) in the determination process of the security assurance level. The end-user has all information to decide by himself to establish the service or not, including potential consequences.

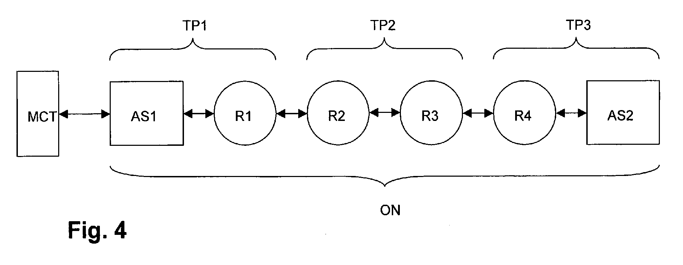

With respect to **Figure 4****,** the inventive determination of a security assurance level is demonstrated by way of an example of bank account consulting as a requested service.

First the user of a mobile communication terminal (MCT) initiates a service request which is sent to an interface device, here a first application server (AS1) of a first telecom provider (TP1). This requests includes the information that a mobile communication must connect to a second application server (AS2) of his bank, and the request further includes the information that the service type is e-banking.

Upon the request, AS1 determines the security standard that is applicable for e-banking, together with the minimum security measures that are demanded by this security standard. This information is taken from a database installed on the application server here. The security standard for e-banking in this example requires from a physical data connection:
- good firewall security at every connection point (i.e. routers, servers) involved in the physical data connection,
- further tap-save connections between the connection points,
- and finally the MTC must run a safe software (for details see below).
Along with the security standard, AS1 is provided by the database with evaluation rules for identified security hazards (see below) and assignment rules for assigning a simplified security assurance level (see below).

Next, the AS1 determines a possible physical data connection to AS2 within the operator network ON. This physical data route includes four routers R1-R4 here, i.e. the physical data route is AS1-R1-R2-R3-R4-AS2.

AS1 and R1 belong to the infrastructure of TP1, so TP1 knows about corresponding security measures of interest. Here AS1 and R1 are secured by firewalls of type A, and the connections AS1-R1 and R1-R2 are optic fiber connections.

R2 and R3 belong to a second telecom provider TP2. TP1 requests security information about R2, R3 and their connection from TP2. TP2 tells TP1 that he uses firewalls of type B for his routers R2, R3, and they are connected by digital radio transmissions using a 128bit encryption.

R4 and AS2 belong to a third telecom provider TP3. TP1 therefore requests security information about R4, AS2 and their connections from TP3. TP3 tells TP1 that R3 and R4 are connected by digital radio transmission using a 16bit encryption, and R4 and AS2 are secured by a firewall of type A, and that R4 and AS2 are connected by an optical fiber line.

Finally, TP1 requests information about the security configuration of the MCT. The MTC tells it runs a communication software of type C.

Note that requests of TP1 are usually organized by a software module, and/or may involve a security assurance server dedicated to gathering security information as described above.

Then AS1 resp. its software module analyses the information, using the applicable security standard as well as evaluation rules for identified security hazards in e-banking, here defined in a database of AS1:
All routers R1-R4 and application servers AS1, AS2 are secured by firewalls, with security levels A or B each. Level A is considered sufficiently secured by AS1 within the e-banking security standard, and level B of R2, R3 is considered not optimal, but still as a good security measure (=low hazard level), according to the evaluation rules. The connections include optical fibers (that can hardly be tapped) considered secure by the security standard, an two digital radio transmissions. These latter run the risk of being tapped, but connection R2-R3 is 128bit encrypted, what is considered sufficiently secure by the security standard. However, connection R3-R4 is only 16bit encrypted, what is considered only as a medium measure for confidentiality (=medium hazard level), according to the evaluation rules. The communication software type C of the MCT is considered safe by the security standard. Connection points or connections from which no security information is available would be considered as having no useful security measures (=high hazard level) by the evaluation rules, but here information about the complete physical data connection has been available. No connection points (i.e. routers, servers) or connections have been assigned with a high hazard level.

The AS1 then has to assign one of the following overall (simplified) security assurance levels for the connection: green (high assurance that the scheduled/expected security standard is active), or yellow (some security measures are taken, but conditions are not optimal), or red (the user is advised not to establish the service; due to severe security deficiencies no assurance can be given).

AS1 assigns the security assurance level by the following assignment rules:
- ignore connection points and connections with sufficiently safe measures;
- count the number of connection points and connections ("hazards") of low hazard level, medium hazard level, and high hazard level each;
- every three low level hazards make a medium level hazard, every three medium level hazards make a high level hazard;
- if there is at least one high level hazard, the security assurance level is red.
- else, if there is at least one medium level hazard, the security assurance level is yellow.
- else, i.e. if there are at maximum two low level hazards, the security assurance level is green.

Here, there are two low level hazards (firewalls of R2, R3) and one medium hazard (16bit encryption of connection R3-R4), and no high level hazards, resulting in a yellow security assurance level. AS1 then indicates security assurance level "yellow" to the MCT, which displays a corresponding yellow icon on its display.

By means of the displayed yellow security assurance level, the end-user has a meaningful information from the network operator about the actual security of the requested service, relative to the scheduled security standard that is commonly demanded for the type of service requested. The inventive security assurance level is a measure for the level of confidence the user can have in the presence and activity of security measures he can expect for (i.e. which should be deployed for) the type of service requested.

## Claims

1. Method for determining a security assurance level of a mobile communication, with the following steps:
a) a mobile communication terminal (MCT) sends a service request (1) to an infrastructure device (ID) of a mobile communication network (ON),
b) the infrastructure device (ID) determines a scheduled security standard for the requested service, wherein the security standard defines minimum security measures within the mobile communication network (ON);
b') the infrastructure device (ID) verifies whether the minimum security measures are active within the mobile communication network (ON) or not, wherein the operator of the infrastructure device (ID) actively checks relevant security information (α, β, δ) including that the infrastructure device (ID) requests (3) and receives assurance information (P) about telecom infrastructure of the mobile communication network (ON) required for the requested service, and the infrastructure device (ID) determines (5) a security assurance level (rd, ye, gr) that can be achieved for the mobile communication required for said service, wherein the security assurance level (rd, ye, gr) is a function of the ratio of the verified active security measures and the respective minimum security measures as defined by the security standard, and wherein said mobile communication involves the mobile communication terminal (MCT) and said mobile communication network (ON),
c) the infrastructure device (ID) sends information (6) about the determined security assurance level (rd, ye, gr) to the mobile communication terminal (MCT), wherein the determined security assurance level (rd, ye, gr) is an indication for a user of the mobile communication terminal (MCT) to decide whether to establish the requested service or not,
d) the mobile communication terminal (MCT) indicates said security assurance level (rd, ye, gr) to a user, and
e) the user decides whether to establish the mobile communication required for the service or not.

2. Method according to claim 1, wherein the security assurance level (rd, ye, gr) is one of a predetermined set of security assurance levels (rd, ye, gr).

3. Method according to claim 1, wherein in step d) the mobile communication terminal (MCT) indicates said security assurance level (rd, ye, gr) to a user by displaying an icon.

4. Method according to claim 1, wherein during step b), the infrastructure device (ID) requests (2) and receives technical configuration information (α) from the mobile communication terminal (MCT).

5. Method according to claim 1, wherein during step b'), the infrastructure device (ID) requests (3) and receives the assurance information (β) about telecom infrastructure of the mobile communication network (ON) required for the requested service by means of a security assurance server (SAS) of the mobile communication network (ON).

6. Method according to claim 1, wherein during step b'), the infrastructure device (ID) requests (4) and receives further assurance information (δ) from the mobile communication network (ON) about the mobile communication required for the requested service.

7. Method according to claim 6, wherein the further assurance information (δ) comprises private information on the user of the service.

8. Infrastructure device (ID) for a mobile communication network (ON), wherein the infrastructure device (ID) comprises first means for
- receiving a service request from a mobile communication terminal (MCT),
- determining a scheduled security standard for the requested service, wherein the security standard defines minimum security measures within the mobile communication network (ON),
- verifying whether the minimum security measures are active within the mobile communication network (ON) or not, wherein the infrastructure device (ID) comprises a software module (SM1) for actively checking relevant security information (α, β, δ) including that the software module (SM1) of the infrastructure device (ID) is programmed to request (3) and receive assurance information (β) about telecom infrastructure of the mobile communication network (ON) required for the requested service;
- determining (5) a security assurance level (rd, ye, gr) of a mobile communication required for the service requested, wherein the security assurance level (rd, ye, gr) is a function of the ratio of the verified active security measures and the respective minimum security measures as defined by the security standard;
- sending information (6) about the determined security assurance level (rd, ye, gr) to the mobile communication terminal (MCT), wherein the determined security assurance level (rd, ye, gr) is an indication for a user of the mobile communication terminal (MCT) to decide whether to establish the requested service or not.

9. Communication system comprising an infrastructure device (ID) according to claim 8 and a mobile communication terminal (MCT), wherein the mobile communication terminal (MCT) comprises second means for
- sending a service request (1) to the infrastructure device (ID),
- receiving a security assurance level information (6) from the infrastructure device (ID),
- indicating said security assurance level (rd, ye, gr) to a user,
- and receiving a user decision whether to establish the mobile communication or not.

10. Communication system according to claim 9, **characterized in that** the first means comprises a first software module (SM1), and the second means comprises a second software module (SM2).

## Patentansprüche

1. Verfahren zum Bestimmen der Sicherheitsgarantiestufe einer mobilen Kommunikation mit den folgenden Schritten:
a) ein mobiles Kommunikationsendgerät (Mobile Communication Terminal, MCT) sendet eine Dienstanforderung (1) an eine Infrastrukturvorrichtung (ID) eines mobilen Kommunikationsnetzwerks (ON),
b) die Infrastrukturvorrichtung (ID) bestimmt einen eingeplanten Sicherheitsstandard für den angeforderten Dienst, wobei der Sicherheitsstandard Mindestsicherheitsmaßnahmen innerhalb des mobilen Kommunikationsnetzwerks (ON) definiert;
b') die Infrastrukturvorrichtung (ID) verifiziert, ob die Mindestsicherheitsmaßnahmen innerhalb des mobilen Kommunikationsnetzwerks (ON) aktiviert sind oder nicht, wobei der Betreiber der Infrastrukturvorrichtung (ID) aktiv relevante Sicherheitsinformationen (α, β, δ) und dabei unter anderem prüft, ob die Infrastrukturvorrichtung (ID) Sicherheitsgarantieinformationen (ß) zur Telekommunikationsinfrastruktur des mobilen Kommunikationsnetzwerks (ON) abfragt (3) und empfängt, die für den angeforderten Dienst erforderlich sind, und wobei die Infrastrukturvorrichtung (ID) eine Sicherheitsgarantiestufe (rd, ye, gr) bestimmt (5), die für die mobile Kommunikation erreicht werden kann, die für besagten Dienst erforderlich ist, wobei die Sicherheitsgarantiestufe (rd, ye, gr) eine Funktion des Ratios der verifizierten, aktiven Sicherheitsmaßnahmen und der entsprechenden Mindestsicherheitsmaßnahmen entsprechend der Definition der Sicherheitsstandards ist, und wobei besagte mobile Kommunikation das mobile Kommunikationsendgerät (MCT) und besagtes mobiles Kommunikationsnetzwerk (ON) einbezieht,
c) die Infrastrukturvorrichtung (ID) sendet Informationen (6) über die bestimmte Sicherheitsgarantiestufe (rd, ye, gr) an das mobile Kommunikationsendgerät (MCT), wobei die bestimmte Sicherheitsgarantiestufe (rd, ye, gr) eine Anzeige für einen Benutzer des mobilen Kommunikationsendgeräts (MCT) ist, zu entscheiden, ob der angeforderte Dienst einzurichten ist oder nicht,
d) das mobile Kommunikationsendgerät (MCT) zeigt besagte Sicherheitsgarantiestufe (rd, ye, gr) einem Benutzer an, und
e) der Benutzer entscheidet, ob die mobile Kommunikation eingerichtet wird, die für den Dienst erforderlich ist, oder nicht.

2. Verfahren nach Anspruch 1, wobei die Sicherheitsgarantiestufe (rd, ye, gr) zu einem vorbestimmten Satz von Sicherheitsgarantiestufen (rd, ye, gr) gehört.

3. Verfahren nach Anspruch 1, wobei in Schritt d) das mobile Kommunikationsendgerät (MCT) einem Benutzer anhand eines Symbols die besagte Sicherheitsgarantiestufe (rd, ye, gr) anzeigt.

4. Verfahren nach Anspruch 1, wobei die Infrastrukturvorrichtung (ID) im Verlauf von Schritt b) von dem mobilen Kommunikationsendgerät (MCT) technische Konfigurationsinformationen (α) anfordert (2) und erhält.

5. Verfahren nach Anspruch 1, wobei die Infrastrukturvorrichtung (ID) im Verlauf von Schritt b') über einen Sicherheitsgarantieserver (Security Assurance Server, SAS) des mobilen Kommunikationsnetzwerks (ON) die Garantieinformationen (ß) über die für den angeforderten Dienst erforderliche Telefoninfrastruktur des mobilen Kommunikationsnetzwerks (ON) anfordert (3) und erhält.

6. Verfahren nach Anspruch 1, wobei die Infrastrukturvorrichtung (ID) im Verlauf von Schritt b') von dem mobilen Kommunikationsnetzwerk (ON) weitere Garantieinformationen (δ) über die für den angeforderten Dienst erforderliche, mobile Kommunikation anfordert (4) und empfängt.

7. Verfahren nach Anspruch 6, wobei die weiteren Garantieinformationen (δ) private Informationen des Benutzers des Dienstes umfassen.

8. Infrastrukturvorrichtung (ID) für ein mobiles Kommunikationsnetzwerk (ON), wobei die Infrastrukturvorrichtung (ID) erste Mitte umfasst für
- den Empfang einer Dienstanforderung von einem mobilen Kommunikationsendgerät (MCT),
- das Bestimmen eines eingeplanten Sicherheitsstandards für den angeforderten Dienst, wobei der Sicherheitsstandard Mindestsicherheitsmaßnahmen innerhalb des mobilen Kommunikationsnetzwerks (ON) definiert,
- das Verifizieren, ob die Mindestsicherheitsmaßnahmen in dem mobilen Kommunikationsnetzwerk (ON) aktiv sind oder nicht, wobei die Infrastrukturvorrichtung (ID) ein Softwaremodul (SM1) für das aktive Prüfen relevanter Sicherheitsinformationen (α, ß, δ) umfasst, darunter auch diejenige, ob das Softwaremodul (SM1) der Infrastrukturvorrichtung (ID) dafür programmiert ist, um Garantieinformationen (ß) über die Telefoninfrastruktur des für den angeforderten Dienst erforderlichen Kommunikationsnetzwerks (ON) anzufordern (3) und zu empfangen;
- das Bestimmen (5) einer Sicherheitsgarantiestufe (rd, ye, gr) einer für den angeforderten Dienst erforderlichen Mobilkommunikation, wobei die Sicherheitsgarantiestufe (rd, ye, gr) eine Funktion des Verhältnisses der verifizierten aktiven Sicherheitsmaßnahmen und der entsprechenden Mindestsicherheitsmaßnahmen ist, wie sie von dem Sicherheitsstandard definiert sind;
- das Senden von Informationen (6) über die bestimmte Sicherheitsgarantiestufe (rd, ye, gr) an das mobile Kommunikationsendgerät (MCT), wobei die bestimmte Sicherheitsgarantiestufe (rd, ye, gr) eine Anzeige für einen Benutzer des mobilen Kommunikationsendgeräts (MCT) ist, zu entscheiden, ob der angeforderte Dienst einzurichten ist oder nicht.

9. Kommunikationssystem, eine Infrastrukturvorrichtung (ID) nach Anspruch 8 und ein mobiles Kommunikationsendgerät (MCT) umfassend, wobei das mobile Kommunikationsendgerät (MCT) zweite Mittel umfasst für
- das Senden einer Dienstanforderung (1) an die Infrastrukturvorrichtung (ID),
- den Empfang einer Sicherheitsgarantiestufeninformation (6) von der Infrastrukturvorrichtung (ID),
- einem Benutzer die besagte Sicherheitsgarantiestufe (rd, ye, gr) anzeigen,
- und den Empfang einer Benutzerentscheidung, ob die mobile Kommunikation herzustellen ist oder nicht.

10. Kommunikationssystem nach Anspruch 9, **dadurch gekennzeichnet, dass** die ersten Mittel ein erstes Softwaremodul (SM1) und die zweiten Mittel ein zweites Softwaremodul (SM2) umfassen.

## Revendications

1. Procédé destiné à déterminer un niveau d'assurance de la sécurité d'une communication mobile, comprenant les étapes suivantes :
a) un terminal de communication mobile (MCT) envoie une demande de service (1) à un dispositif d'infrastructure (ID) d'un réseau de communication mobile (ON) ;
b) le dispositif d'infrastructure (ID) détermine une norme de sécurité planifiée pour le service demandé, la norme de sécurité définissant des mesures de sécurité minimales au sein du réseau de communication mobile (ON) ;
b') le dispositif d'infrastructure (ID) vérifie si les mesures de sécurité minimales sont actives ou non au sein du réseau de communication mobile (ON), l'opérateur du dispositif d'infrastructure (ID) vérifiant activement les informations de sécurité pertinentes (α, ß, δ) notamment que le dispositif d'infrastructure (ID) demande (3) et reçoit les informations d'assurance (ß) concernant l'infrastructure de télécommunications du réseau de communication mobile (ON) requise par le service demandé, et le dispositif d'infrastructure (ID) détermine (5) un niveau d'assurance de la sécurité (rd, ye, gr) pouvant être atteint pour la communication mobile requise pour ledit service, le niveau d'assurance de la sécurité (rd, ye, gr) étant une fonction du rapport entre les mesures de sécurité actives vérifiées et les mesures de sécurité minimales correspondantes telles que définies par la norme de sécurité, et ladite communication mobile impliquant le terminal de communication mobile (MCT) et ledit réseau de communication mobile (ON) ;
c) le dispositif d'infrastructure (ID) envoie des informations (6) concernant le niveau d'assurance de la sécurité déterminé (rd, ye, gr) au terminal de communication mobile (MCT), le niveau d'assurance de la sécurité déterminé (rd, ye, gr) étant une indication pour un utilisateur du terminal de communication mobile (MCT) pour décider d'établir ou non le service demandé ;
d) le terminal de communication mobile (MCT) indique ledit niveau d'assurance de la sécurité (rd, ye, gr) à un utilisateur ; et
e) l'utilisateur décide d'établir ou non la communication mobile requise pour le service.

2. Procédé selon la revendication 1, dans lequel le niveau d'assurance de la sécurité (rd, ye, gr) est un élément d'un ensemble prédéterminé de niveaux d'assurance de la sécurité (rd, ye, gr).

3. Procédé selon la revendication 1, dans lequel à l'étape d), le terminal de communication mobile (MCT) indique ledit niveau d'assurance de la sécurité (rd, ye, gr) à un utilisateur en affichant une icône.

4. Procédé selon la revendication 1, dans lequel à l'étape b), le dispositif d'infrastructure (ID) demande (2) et reçoit des informations de configuration technique (α) en provenance du terminal de communication mobile (MCT).

5. Procédé selon la revendication 1, dans lequel à l'étape b'), le dispositif d'infrastructure (ID) demande (3) et reçoit les informations d'assurance (ß) concernant l'infrastructure de télécommunications du réseau de communication mobile (ON) requise pour le service demandé par le biais d'un serveur d'assurance de la sécurité (SAS) du réseau de communication mobile (ON).

6. Procédé selon la revendication 1, dans lequel à l'étape b'), le dispositif d'infrastructure (ID) demande (4) et reçoit d'autres informations d'assurance (δ) en provenance du réseau de communication mobile (ON) concernant la communication mobile requise pour le service demandé.

7. Procédé selon la revendication 6, dans lequel les autres informations d'assurance (δ) comprennent des informations privées sur l'utilisateur du service.

8. Dispositif d'infrastructure (ID) destiné à un réseau de communication mobile (ON), dans lequel le dispositif d'infrastructure (ID) comprend des premiers moyens destinés à
- recevoir une demande de service en provenance d'un terminal de communication mobile (MCT) ;
- déterminer une norme de sécurité planifiée pour le service demandé, la norme de sécurité définissant des mesures de sécurité minimales au sein du réseau de communication mobile (ON) ;
- vérifier si les mesures de sécurité minimales sont actives ou non au sein du réseau de communication mobile (ON), le dispositif d'infrastructure (ID) comprenant un module logiciel (SM1) destiné à vérifier activement les informations de sécurité pertinentes (α, ß, δ) notamment que le module logiciel (SM1) du dispositif d'infrastructure (ID) est programmé pour demander (3) et recevoir les informations d'assurance (ß) concernant l'infrastructure de télécommunications du réseau de communication mobile (ON) requise pour le service demandé ;
- déterminer (5) un niveau d'assurance de la sécurité (rd, ye, gr) d'une communication mobile requise pour le service demandé, le niveau d'assurance de la sécurité (rd, ye, gr) étant une fonction du rapport entre les mesures de sécurité actives vérifiées et les mesures de sécurité minimales correspondantes telles que définies par la norme de sécurité ;
- envoyer des informations (6) concernant le niveau d'assurance de la sécurité déterminé (rd, ye, gr) au terminal de communication mobile (MCT), le niveau d'assurance de la sécurité déterminé (rd, ye, gr) étant une indication pour un utilisateur du terminal de communication mobile (MCT) pour décider d'établir ou non le service demandé.

9. Système de communication comprenant un dispositif d'infrastructure (ID) selon la revendication 8 et un terminal de communication mobile (MCT), le terminal de communication mobile (MCT) comprenant des deuxièmes moyens destinés à
- envoyer une demande de service (1) au dispositif d'infrastructure (ID),
- recevoir des informations de niveau d'assurance de la sécurité (6) en provenance du dispositif d'infrastructure (ID),
- indiquer ledit niveau d'assurance de la sécurité (rd, ye, gr) à un utilisateur, et
- recevoir une décision de l'utilisateur d'établir ou non la communication mobile.

10. Système de communication selon la revendication 9, **caractérisé en ce que** les premiers moyens comprennent un premier module logiciel (SM1), et les deuxièmes moyens comprennent un deuxième module logiciel (SM2).
